# EUROPEAN PATENT APPLICATION

(11) **EP 4 458 441 A1**
(43) Date of publication of application: **06.11.2024**
(21) Application number: 24165242.9
(22) Date of filing: 21.03.2024
(51) Int. Cl.: A63F 13/63, A63F 13/31, A63F 13/533, A63F 13/92

(54) **AN INFORMATION PROCESSING METHOD, INFORMATION PROCESSING SYSTEM AND COMPUTER PROGRAM**

(30) Priority: 03.05.2023 GB 202306499
(71) Applicant: Sony Interactive Entertainment Inc., Tokyo 108-0075 (JP)
(72) Inventor: LEUNG, Jun Yen, London, W1F 7LP (GB)
(74) Representative: D Young & Co LLP

(57) **Abstract**

An information processing method is provided, the information processing method comprising: storing a value of a control setting for an information processing system; executing first software on the information processing system, wherein the first software is a video game; updating, during execution of the first software, the value of the control setting in dependence upon an input instruction received via second software executed on a portable electronic device; and generating content for provision to a user in dependence upon the execution of the first software and the value of the control setting.

## Description

### BACKGROUND

### Field of the Disclosure

The present disclosure relates to an information processing method, information processing system and computer program.

### Description of the Related Art

The "background" description provided herein is for the purpose of generally presenting the context of the disclosure. Work of the presently named inventors, to the extent it is described in the background section, as well as aspects of the description which may not otherwise qualify as prior art at the time of filing, are neither expressly or impliedly admitted as prior art against the present invention.

An information processing system may be configured to execute software. This software may include software such as a video game or the like. The output from the software executed on the information processing system may be presented to a user on a display device or the like. In this way, a user can enjoy playing a video game (or other software) on the information processing system.

In some situations, a user may wish to control the information processing system to change certain settings related to the software being executed. For example, if the user is playing a video game, the user may wish to change certain game control settings related to the video game being played.

However, it can often be difficult to change these settings. This may increase frustration of the user when operating the information processing system.

It is an aim of the present disclosure to address or mitigate this problem.

### SUMMARY:

A brief summary about the present disclosure is provided hereinafter to provide basic understanding related to certain aspects of the present disclosure.

Embodiments of the present disclosure are defined by the independent claims. Further aspects of the disclosure are defined by the dependent claims.

According to embodiments of the present disclosure, one or more control settings may be updated more easily and efficiently during execution of first software on an information processing system. However, the present disclosure is not particularly limited to this advantageous technical effect. Other technical effects will become apparent to the skilled person when reading the disclosure.

### BRIEF DESCRIPTION OF THE DRAWINGS:

A more complete appreciation of the disclosure and many of the attendant advantages thereof will be readily obtained as the same becomes better understood by reference to the following detailed description when considered in connection with the accompanying drawings, wherein:
Figure 1 illustrates an apparatus in accordance with embodiments of the disclosure;
Figure 2 illustrates an example of an entertainment system in accordance with embodiments of the disclosure;
Figure 3 illustrates an example handheld controller in accordance with embodiments of the disclosure;
Figure 4 illustrates the architecture of an example HMD device in accordance with embodiments of the disclosure;
Figure 5 illustrates an example implementation of an information processing system in accordance with embodiments of the disclosure;
Figure 6 illustrates an example implementation of an information processing system in accordance with embodiments of the disclosure;
Figure 7 illustrates an example of updating control settings in accordance with embodiments of the disclosure;
Figure 8 illustrates an example information processing method in accordance with embodiments of the disclosure.

### DESCRIPTION OF THE EMBODIMENTS:

The foregoing paragraphs have been provided by way of general introduction, and are not intended to limit the scope of the following claims. The described embodiments, together with further advantages, will be best understood by reference to the following detailed description taken in conjunction with the accompanying drawings (wherein like reference numerals designate identical or corresponding parts throughout the several views).

In the following description, a number of specific details are presented in order to provide a thorough understanding of embodiments of the present disclosure. It will be apparent, however, to a person skilled in the art that these specific details need not be employed to practice the invention. Conversely, specific details known to the person skilled in the art are omitted for the purposes of clarity where appropriate.

Furthermore, the terms "coupled" and "connected," along with their derivatives, may be used herein to describe structural relationships between components of the apparatus or system for performing the operations herein. It should be understood that these terms are not intended as synonyms for each other.

Rather, in particular embodiments, "connected" is used to indicate that two or more elements are in direct physical or electrical contact with each other while "coupled" is used to indicate two or more elements are in either direct or indirect (with other intervening elements between them) physical or electrical contact with each other, and/or that the two or more elements co-operate or communicate with each other (e.g., as in a cause and effect relationship).

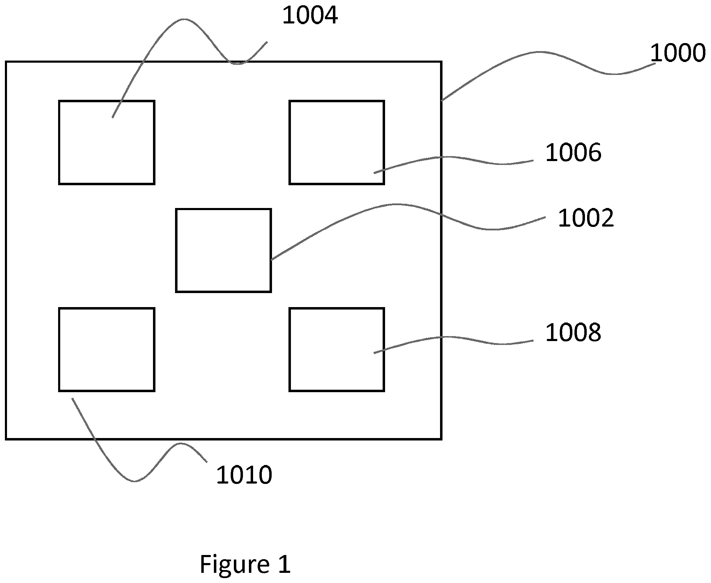

Referring to Figure 1, an apparatus 1000 (an example of an information processing apparatus) according to embodiments of the disclosure is shown. Typically, an apparatus 1000 according to embodiments of the disclosure is a computer device such as a personal computer, an entertainment system or videogame console such as the Sony^{®} PlayStation 5^{®}, or a terminal connected to a server. Indeed, in embodiments, the apparatus may also be a server. The apparatus 1000 is controlled using a microprocessor or other processing circuitry 1002. In some examples, the apparatus 1000 may be a portable computing device such as a mobile phone, laptop computer or tablet -computing device.

The processing circuitry 1002 may be a microprocessor carrying out computer instructions or may be an Application Specific Integrated Circuit. The computer instructions are stored on storage medium 1004 which maybe a magnetically readable medium, optically readable medium or solid state type circuitry. The storage medium 1004 may be integrated into the apparatus 1000 or may be separate to the apparatus 1000 and connected thereto using either a wired or wireless connection. The computer instructions may be embodied as computer software that contains computer readable code which, when loaded onto the processor circuitry 1002, configures the processor circuitry 1002 to perform a method according to embodiments of the disclosure.

Additionally, an optional user input device 1006 is shown connected to the processing circuitry 1002. The user input device 1006 may be a touch screen or may be a mouse or stylist type input device. The user input device 1006 may also be a keyboard, controller, or any combination of these devices.

A network connection 1008 may optionally be coupled to the processor circuitry 1002. The network connection 1008 may be a connection to a Local Area Network or a Wide Area Network such as the Internet or a Virtual Private Network or the like. The network connection 1008 may be connected to a server allowing the processor circuitry 1002 to communicate with another apparatus in order to obtain or provide relevant data. The network connection 1002 may be behind a firewall or some other form of network security.

Additionally, shown coupled to the processing circuitry 1002, is a display device 1010. The display device 1010, although shown integrated into the apparatus 1000, may additionally be separate to the apparatus 1000 and may be a monitor or some kind of device allowing the user to visualize the operation of the system (e.g. a display screen or a head mounted display). In addition, the display device 1010 may be a printer, projector or some other device allowing relevant information generated by the apparatus 1000 to be viewed by the user or by a third party.

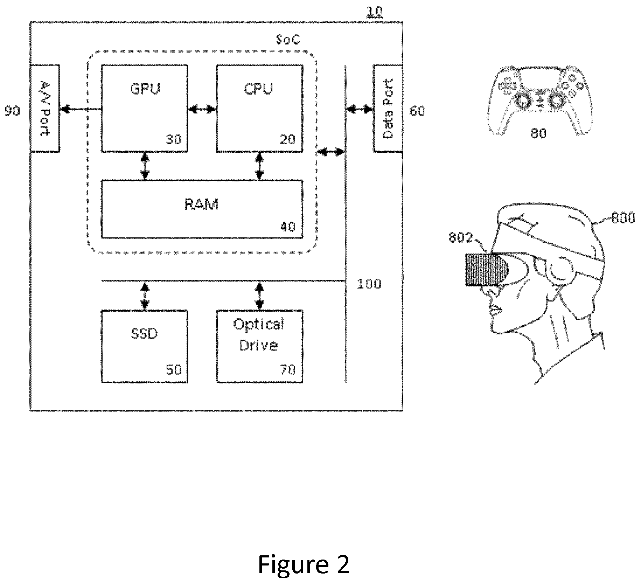

Referring now to Figure 2, an example of an entertainment system in accordance with embodiments of the disclosure is illustrated. An example of an entertainment system 10 is a computer or console such as the Sony ^{®} PlayStation 5 ^{®} (PS5). The entertainment system 10 is an example of an information processing apparatus 1000 in accordance with embodiments of the disclosure.

The entertainment system 10 comprises a central processor 20. This may be a single or multi core processor, for example comprising eight cores as in the PS5. The entertainment system also comprises a graphical processing unit or GPU 30. The GPU can be physically separate to the CPU, or integrated with the CPU as a system on a chip (SoC) as in the PS5.

The entertainment device also comprises RAM 40, and may either have separate RAM for each of the CPU and GPU, or shared RAM as in the PS5. The or each RAM can be physically separate, or integrated as part of an SoC as in the PS5. Further storage is provided by a disk 50, either as an external or internal hard drive, or as an external solid state drive, or an internal solid state drive as in the PS5.

The entertainment device may transmit or receive data via one or more data ports 60, such as a USB port, Ethernet ^{®} port, WiFi ^{®} port, Bluetooth ^{®} port or similar, as appropriate. It may also optionally receive data via an optical drive 70.

Interaction with the system is typically provided using one or more handheld controllers 80, such as the DualSense ^{®} controller in the case of the PS5.

Audio/visual outputs from the entertainment device are typically provided through one or more A/V ports 90, or through one or more of the wired or wireless data ports 60.

Where components are not integrated, they may be connected as appropriate either by a dedicated data link or via a bus 100.

An example of a device for displaying images output by the entertainment system is a head mounted display 'HMD' 802, worn by a user 800.

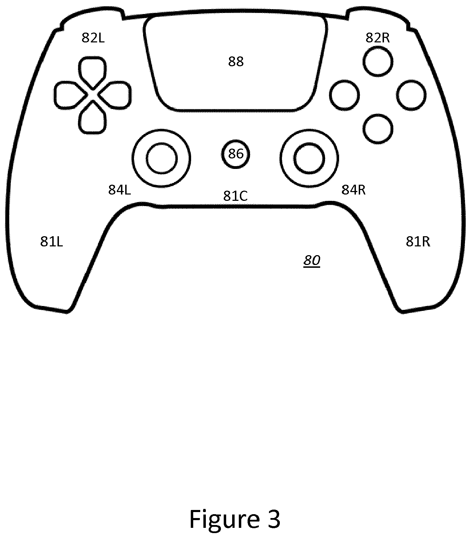

Turning now to Figure 3 of the present disclosure, an example of a handheld controller in accordance with embodiments of the disclosure is illustrated. Indeed, in Figure 3, a DualSense ^{®} controller 80 is illustrated as an example of a handheld controller. Such a controller typically has two handle sections 81L,R and a central body 81C. Various controls are distributed over the controller, typically in local groups. Examples include a left button group 82L, which may comprise directional controls and/or one or more shoulder buttons, and similarly right button group 82R, which comprise function controls and/or one or more shoulder buttons. The controller also includes left and/or right joysticks 84L,R, which may optionally also be operable as buttons by pressing down on them.

The controller (typically in the central portion of the device) may also comprise one or more system buttons 86, which typically cause interaction with an operating system of the entertainment device rather than with a game or other application currently running on it; such buttons may summon a system menu, or allow for recording or sharing of displayed content. Furthermore, the controller may comprise one or more other elements such as a touchpad 88, a light for optical tracking (not shown), a screen (not shown), haptic feedback elements (not shown), and the like.

It will be appreciated that a head mounted display 'HMD', worn by a user, can display images output by the entertainment system.

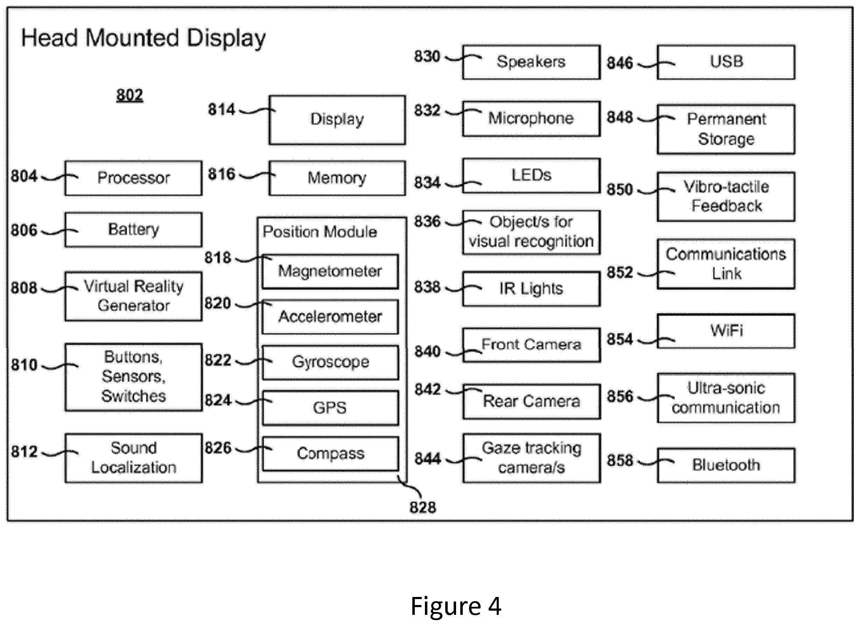

Referring now to Figure 4, this illustrates the architecture of an example HMD device. The HMD may also be a computing device and may include modules usually found on a computing device, such as one or more of a processor 804, memory 816 (RAM, ROM, etc.), one or more batteries 806 or other power sources, and permanent storage 848 (such as a solid state disk).

One or more communication modules can allow the HMD to exchange information with other portable devices, other computers (e.g. the PS5^{®}), other HMDs, servers, etc. Communication modules can include a Universal Serial Bus (USB) connector 846, a communications link 852 (such as Ethernet ^{®}), ultrasonic or infrared communication 856, Bluetooth ^{®} 858, and WiFi ^{®} 854.

A user interface can include one or more modules for input and output. The input modules can include input buttons (e.g. a power button), sensors and switches 810, a microphone 832, a touch sensitive screen (not shown, that may be used to configure or initialize the HMD), one or more front cameras 840, one or more rear cameras 842, one or more gaze tracking cameras 844. Other input/output devices, such as a keyboard or a mouse, can also be connected to the portable device via communications link, such as USB or Bluetooth ^{®}.

The output modules can include the display 814 for rendering images in front of the user's eyes. Some embodiments may include one display, two displays (one for each eye), micro projectors, or other display technologies. Other output modules can include Light-Emitting Diodes (LED) 834 (which may also be used for visual tracking of the HMD), vibro-tactile feedback 850, speakers 830, and a sound localization module 812, which performs sound localization for sounds to be delivered to speakers or headphones. Other output devices, such as headphones, can also connect to the HMD via the communication modules, be permanently attached to the HMD, or integral to it.

One or more elements that may be included to facilitate motion tracking include LEDs 834, one or more objects for visual recognition 836, and infrared lights 838. Alternatively or in addition, the one or more front or rear cameras may facilitate motion tracking based on image motion.

Information from one or more different modules can be used by the position module 828 to calculate the position of the HMD. These modules can include a magnetometer 818, an accelerometer 820, a gyroscope 822, a Global Positioning System (GPS) module 824, and a compass 826. Alternatively or in addition, the position module can analyze image data captured with one or more of the cameras to calculate the position. Further yet, optionally the position module can perform tests to determine the position of the portable device or the position of other devices in the vicinity, such as a WiFi ping test or ultrasound tests.

A virtual reality generator 808 then outputs one or more images corresponding to a virtual or augmented reality environment or elements thereof, using the position calculated by the position module. The virtual reality generator 808 may cooperate with other computing devices (e.g., PS5^{®} or other game console, Internet server, etc.) to generate images for the display module 814. The remote devices may send screen updates or instructions for creating game objects on the screen. Hence the virtual reality generator 808 may be responsible for none, some, or all of the generation of one or more images then presented to the user, and / or may be responsible for any shifting of some or all of one or both images in response to interframe motion of the user (e.g. so-called reprojection).

It should be appreciated that the embodiment illustrated in Figure 4 is an exemplary implementation of an HMD, and other embodiments may utilize different modules, a subset of the modules, or assign related tasks to different modules. The embodiment illustrated in Figure 4 should therefore not be interpreted to be exclusive or limiting, but rather exemplary or illustrative. It will also be appreciated that the functionality of at least a subset of the modules may be provided by, or in concert with, corresponding modules of the entertainment device (in turn typically provided by a processor of that device operating under suitable software instruction).

As explained in the Background, a user may use an information processing system to execute one or more pieces of software. Taking the entertainment system 10 as an example of an information processing system, a user may use the entertainment system 10 to play a video game.

In some situations, when playing the video game, the user may wish to change certain game control settings related to the video game being played. For example, the user may wish to control certain settings in order to make it easier to see the video game displayed on a display device.

However, as explained, it can often be difficult to change these settings. This may increase frustration of the user when playing a video game (or otherwise operating an information processing system).

Typically, control settings may be found in certain menus within the video game. Therefore, a user may have to navigate through multiple different menus in order to make changes to the control settings. This can be cumbersome and frustrating for the user. Moreover, often the control settings may be found in a pause menu of the video game. Thus, a user may have to repeatedly pause and resume the video game in order to change the control settings and see and/or hear the impact the changes to the control settings have had on the video game. As such, it can be difficult for a user to achieve a desired change in the control settings.

Accordingly, for these reasons (in addition to the reasons described in the Background) an information processing system, an information processing method and a computer program are provided in accordance with embodiments of the present disclosure.

### information Processing System>

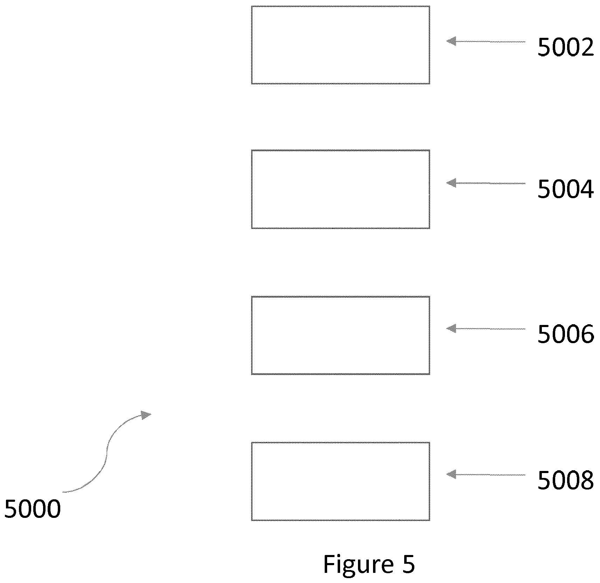

Figure 5 of the present disclosure illustrates an example implementation of an information processing system in accordance with embodiments of the disclosure.

That is, in the example of Figure 5, an information processing system 5000 is provided, comprising a storage unit 5002, an executing unit 5004, an updating unit 5006 and a generating unit 5008.

The storage unit 5002 is configured to store a value of a control setting for an information processing system.

The executing unit 5004 is configured to execute first software on the information processing system, wherein the first software is a video game.

The updating unit 5006 is configured to update, during execution of the first software, the value of the control setting in dependence upon an input instruction received via second software executed on a portable electronic device.

Furthermore, the generating unit 5008 is configured to generate content for provision to a user in dependence upon the execution of the first software and the value of the control setting.

Accordingly, in this way, it becomes easier and more efficient for a user to update settings of the video game during gameplay. Thus, more efficient control of the information processing system is provided.

In some examples, the information processing system 5000 may be provided as part of the entertainment system 10 as described with reference to Figure 2 of the present disclosure. That is, certain features of the information processing system 5000 may also be implemented as part of the entertainment system 10. In particular, one or more of the A/V port 90, GPU 30, CPU 20, RAM 40, SSD 50, Optical Drive 70 and/or Data port 60 of the entertainment system 10 may be configured to implement one or more features of the system 5000. The different units of the information processing system 5000 may be distributed across a number of different devices. Alternatively, the different units of the information processing system 5000 may be provided in a single device.

Indeed, while described as separate units in this example, it will be appreciated more generally that the storing unit 5002, the executing unit 5004, the updating unit 5006 and the generating unit 5008 may be implemented as circuitry of the information processing system 5000.

Furthermore, in some examples one or more other devices may also be provided as part of this system. An example of the one or more other devices which can also be provided as part of this system include a display device (such as a screen or a HMD), a control device (such as controller 80 described with reference to Figure 3 of the present disclosure) and/or an image capture device. Furthermore, in some examples, the portable electronic device may further be included as part of the information processing system 5000.

Further details of the information processing system 5000 will now be provided.

### <Storage Unit>

As explained, the information processing system 5000 may comprise a storage unit 5002 (or circuity) configured to store a value of a control setting for an information processing system.

The type of storage used to store the control value is not particularly limited. In some examples, the storage unit 5002 may be a storage medium such as storage medium 1004 described with reference to Figure 1 of the present disclosure. However, in other examples, the storage unit may comprise a RAM 40 or SSD storage 50 as described with reference to Figure 2 of the present disclosure.

Furthermore, in some examples, the storage unit 5002 may internal to the information processing system 5000. However, in other examples, the storage unit 5002 may be external to the information processing system 5000. That is, the storage unit 5002 may be located in a device such as a server and accessed by the information processing system 5000 when required.

The storage unit 5002 is configured to storage a value of a control setting. In some examples, the value of a single control setting may be stored in the storage unit 5002. However, in other examples, the value of a plurality of control settings may be stored in the storage unit.

In some examples, the control setting may be a specific setting having a specific value for a specific program or a specific user. That is, when the user is executing first software (such as a first video game) on the information processing system, the control setting may have a first value. However, when the user is executing second, different, software (such as a second video game), the control setting may have a second, different, value. As such, according to embodiments of the disclosure, the control setting may be a control setting associated with the first software and used by the information processing system when executing the first software. Therefore, the storage unit 5002 may store different values for the same control setting for use with different programs and/or different users. This enables an appropriate value of the control setting to be used for different software when executed on the information processing system.

Furthermore, in some examples, the control setting may be a general setting used by the information processing system 5000 when executing software or a type of software (e.g. a type of video game). That is, when the user is executing first software of a certain type (e.g. an action video game) then the control setting may have a first value, with this same value being used for the control setting when the user is executing second software of the same type (e.g. a second action video game). In other examples, the same value of the control setting may be used for a plurality of types of first software (such as an action game and a racing game) while a different value of the control setting may be used for different types of first software (such as a puzzle game or the like). Indeed, according to embodiments of the disclosure, the control setting may be a control setting used by the information processing system when executing a plurality of types of first software. This enables a user to use a same value of a control setting when executing a plurality of types of first software which makes it easier for the user to execute software on the information processing system with a desired value of the control setting.

Now, it will be appreciated that the control setting is a setting which can be used in order to change a certain setting of the information processing device when executing a program. The type and nature of these control settings is not particularly limited and may vary depending on the type of program being executed. In particular, the control settings may depend on the type of content which is generated for provision to the user (discussed in more detail later).

Consider an example where a user is playing a video game on an entertainment system (an example implementation of an information processing system). In this example, a control setting may include game control settings which are used by the entertainment system when executing the video game. Video content may be displayed to the user on a display device such as a screen or a HMD as output of the video game. In this case, the control setting may include a setting to control one or more of a brightness of the video content, a colour of the video content, a contrast of the video content, and/or a resolution of the video content, for example.

Alternatively, in some examples, audio content may be produced by an audio device (such as a speaker) as output of the video game. In this case, the control setting may include a setting to control one or more of a volume of the audio content, a frequency of the audio content, a speed of the audio content and/or a type of audio content. For example, the control setting may include a setting to disable a certain type of audio content (e.g. background music) while enabling a second type of audio content (e.g. special effects). Alternatively, the control setting may be used in order to adjust the relative volume of different types of audio content (e.g. the volume of speech in the video game relative to the volume of background music).

Alternatively, the control setting may enable the user to customize a certain sound which should be produced (e.g. the user may be able to select a particular song to be played as background music).

Alternatively, in some examples, the control setting may include settings related to control of an accessibility function of the content. Accessibility functions are functions which are designed to make use of technology easier for certain groups of individuals. These functions may include text-to-speech functions, high contrast functions, closed caption or subtitle functions or the like. The control setting may include a setting to activate or deactivate these accessibility functions. Alternatively or in addition, the control setting may include a setting to change a setting related to the accessibility function (e.g. the size of text displayed when using closed captions or subtitles). Hence, more generally, the control setting includes a setting to control an accessibility function of the content.

Furthermore, in some examples, the control setting may include a video game setting. These video game settings may include game graphics settings (such as settings related to depth of field, motion blur, textures or the like). Alternatively or in addition, these video game settings may include gameplay settings such as a difficulty level of the game or the like.

Accordingly, the storage unit 5002 may store values of a number of different types of control values for a number of different situations.

Now, the storage unit 5002 may store the current value of the control setting. That is, when software (such as a video game) is initially executed on the information processing system, the control settings may have a default value. However, if the value of the control setting is changed by the user (described in more detail later) then the storage unit 5002 may store the new updated value of the control setting. Therefore, the information processing system is able to access the value of the control setting stored in the storage unit during execution of software on the information processing system in order to determine which settings should be used for the current piece of software being executed. Accordingly, changes in the control setting will be reflected during execution of the software by the information processing system 5000.

### <Executing Unit>

As explained, the information processing system 5000 comprises an executing unit 5004 (or circuitry) configured to execute first software on the information processing system. In embodiments, the first software is a video game.

Consider an example where a user is playing a video game on an entertainment system such as that described with reference to Figure 2 of the present disclosure. The information processing system 5000 is then executing the video game.

Indeed, in such an example, the executing unit 5004 may be a central processor 20 and or a graphical processing unit 30. This may be a single or multi core processor, for example comprising eight cores as in the PS5. The GPU can be physically separate to the CPU, or integrated with the CPU as a system on a chip (SoC) as in the PS5.

Output of the video game may be displayed to the user on a display device such as a display screen. This enables the user to see content of the video game. Alternatively, the user may be wearing a HMD such as that described with reference to Figures 2 and 4 of the present disclosure. Output of the video game may then be displayed to the user on the HMD in order to enable the user to see the content of the video game.

The type of video game being played by the user on the information processing system is not particularly limited. For example, the video game may include an action video game, an arcade video game, a racing video game, an adventure video game, a simulator video game or a role playing video game, for example. However, while these examples are provided as different types of video game, the present disclosure is not particularly limited in this regard, and any type of video game can be included.

When playing the video game on the information processing system, the user may provide one or more inputs in order to control a gameplay element of the video game. A gameplay element of the video game is an element which controls an aspect of the game, such as movement of a character, control of a vehicle, interaction with a non-playable character (NPC), interaction with an interactive element, or the like. Control of a gameplay element within the video game therefore changes an element within the game and enables the user to manipulate an aspect of the video game within certain confines of the rules of the game.

Thus, in some examples, the user may control one or more gameplay elements of the video game in dependence upon a input instruction. The way in which the input can be provided depends on the type of input and the type of video game which is being played by the user.

In some examples, the user may control one or more of the gameplay elements of the video game using a controller such as that described with reference to Figures 2 and 3 of the present disclosure. For example, the user may use a joystick 84L or 84R in order to provide an input instruction. In a driving game, for example, the user may use the joystick 84L or 84R in order to control their vehicle.

In some examples, the user may provide an input instruction via a camera or other type of image capture device. For example, the user may perform a certain movement or gesture in or to provide an input to control their character within the game.

In some examples, the user may provide an input instruction to control a gameplay element via a microphone or other type of audio capture device. For example, the user may speak a certain word or voice command in order to control a character within the game. Alternatively, in some examples, the user may use a microphone or other type of audio capture device in order to communicate with other people who are also playing the video game (e.g. users on a different information processing system).

The present disclosure is not particularly limited to these specific mechanisms by which the user can provide an input to control a gameplay element of the game. The user may provide input instructions in a different way than that described (e.g. using a different type of input device) depending on the type of video game being played and/or the specific hardware configuration of the information processing system.

### <Updating Unit>

As explained, the information processing system 5000 also comprises an updating unit 5006 (or circuitry) which is configured to update, during execution of the first software, the value of the control setting in dependence upon an input instruction received via second software executed on a portable electronic device.

The control setting is a setting which is used, by the information processing system, to control a certain setting which can be used in order to change a certain setting of the information processing device when executing a program. For example, the control setting can include settings related to the display of video content, settings related to production of audio content, settings related to accessibility functions, and/or settings related to the game (e.g. graphics settings or gameplay settings). The current value of the control setting is stored in the storage unit 5002 and accessed by the information processing system 5000 as required.

However, there are a number of reasons why the current value of the setting stored in the storage unit may be unsuitable such that it is desired that the current value of the setting can be updated.

For example, the current value of the control settings may not be suitable for a certain type of game or a certain type of content. Alternatively, the user may wish to change the current value of a control setting in order to see whether or not the display of the video content of the video game can be improved. Furthermore, the current value of the setting may be a default value or initial value and may not correspond to a preferred value of the setting for a certain user. Furthermore, the value of the setting may have been set for a certain type of environment (e.g. indoors) and may be unsuitable for a different type of environment (e.g. outdoors). As such, there are many reasons as to why it may be desired to update the current value of the control settings.

However, it can often be difficult to change these settings. This is particularly the case if the user wishes to change the settings once they have already started playing a video game on the information processing system. Difficulty in changing the value of the control settings may increase frustration of the user when playing a video game (or otherwise operating an information processing system). Indeed, in some examples, it can make it very hard for the user to correctly operate the information processing system if they are unable to change the control settings.

There are a number of reasons as to why it can be difficult for the user to change the value of control settings.

Typically, control settings may be found in certain menus within the video game. Therefore, a user may have to navigate through multiple different menus in order to make changes to the control settings. This can be cumbersome and frustrating for the user. Moreover, often the control settings may be found in a pause menu of the video game. Thus, a user may have to repeatedly pause and resume the video game in order to change the control settings and see and/or hear the impact the changes to the control settings have had on the video game. As such, it can be difficult for a user to achieve a desired change in the control settings.

Indeed, pausing and resuming the video game in order to change settings in the video game can make it very difficult for the user to understand how a change in a control setting impacts the execution of the video game by the information processing system 5000. In particular, this repeated pausing and unpausing makes determining the changes made to the setting difficult, as the user may have forgotten what the original setting was like (if it was too bright or not) while they go through menus to change the setting. Therefore, a user may struggle to accurately change a control setting using a typical menu structure for changing the value of the control settings.

As such, according to embodiments of the disclosure, an updating unit 5006 is provided, the updating unit (or circuitry) being configured to update, during execution of the first software, the value of the control setting in dependence upon an input instruction received via second software executed on a portable electronic device.

In this way, one or more control settings may be updated more easily and efficiently during execution of first software on an information processing system.

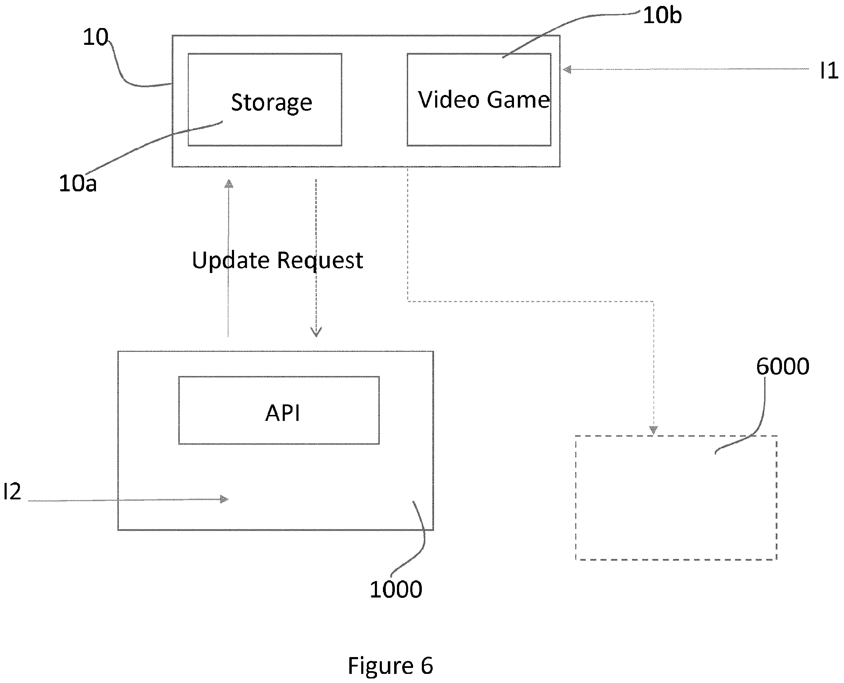

Consider, now, the example of Figure 6 of the present disclosure. Figure 6 illustrates an example implementation of an information processing system in accordance with embodiments of the disclosure. Specifically, this example relates to an example situation where a user is playing a video game on an entertainment system 10 and wishes to update a control setting during the gameplay.

That is, in the example of Figure 6, an entertainment system 10 is shown as an example of an information processing system 5000 of the present disclosure. The entertainment system 10 comprises a storage 10a (an example of a storage unit 5002) which is configured to store a value of a control setting. The entertainment system 10 further comprises a processing unit 10b (an example of an execution unit 5004) which is executing a video game. The output of the video game (such as video content) may be shown on a display screen 6000 in order that the user (not shown) can see the video game.

The display screen 6000 may, optionally, be included as part of the entertainment system 10 (i.e. as part of the information processing system). However, the present disclosure is not particularly limited in this regard.

In this example, the user can provide one or more input instructions I1 via an input device such as a controller 80 in order to control a gameplay element of the video game. For example, in a driving game, the user may provide one or more input instructions via an input device in order to control a vehicle within the video game.

At a certain stage while playing the video game, the user may decide to update one or more of the control settings stored in the storage unit.

As such, in this example, the user may input an instruction I2 via a portable electronic device in order to change the value of the control setting. In this example, the portable electronic device is implemented as an apparatus 1000 as described with reference to Figure 1 of the present disclosure. However, the present disclosure is not particularly limited in this regard. The portable electronic device may include any suitable electronic device such as a personal computing device, a laptop computing device, a tablet computing device, a smart phone, a smart watch (or other wearable technology) or the like.

In this example, an application is stored on the portable electronic device 1000 which can be used by the user to change a value of the control setting. Therefore, the user can provide an input instruction I2 via this application (an example of second software) on the portable electronic device in order to change or update the value of the control setting.

In some examples, the application may include an Application Programming Interface (API) which is able to interface with the entertainment system 10. This API can then be used in order to cause a change in the value of the control setting stored in the entertainment system 10. For example, the API may be configured in order to control communication between the portable electronic device and the entertainment system such that the user can operate the portable electronic device to change a value of the control setting stored in the storage unit. In some examples, the API may receive a communication from the entertainment system 10 in order that the portable electronic device is able to display the current value of the control setting as stored in the storage unit.

In some examples, the application running on the portable electronic device may be specifically linked to the entertainment system. In some examples, the application and the entertainment system may be linked during an initial set-up of the application on the portable electronic device. In some examples, the application and the entertainment system may be linked automatically in accordance with a factor such as a location or proximity of the portable electronic device and the entertainment system. In some examples, authentication of the user may be required in order for the user to operate the application to change a value of the control setting stored in the entertainment system. This authentication can include biometric authentication (such as a finger print or the user or the like) and/or use of a password or Personal Identification Number (PIN). In some examples, the user may have to perform authentication in order to change certain restricted control settings.

The nature of the communication between the portable electronic device 1000 and the entertainment system 10 is not particularly limited. That is, the portable electronic device and the entertainment system 10 may communicate using any suitable wired or wireless communication. In some examples, the portable electronic device 1000 and the entertainment system 10 may communicate over a network such as the internet. However, in other examples, the portable electronic device 1000 and the entertainment system 10 may communicate using a short range wireless communication link such as Bluetooth ^{®} or the like.

Furthermore, in some examples, the input instruction provided by the user may include an instruction to replace a current value of the control setting with a new value of the control setting (e.g. an instruction to replace a brightness setting of 4 with a brightness setting of 10). However, in other examples, the input instruction provided by the user may include an instruction to modify a current value of the control setting (e.g. an instruction to increase the current value of a brightness setting by 2). That is, a value of the control setting relative to the current value of the control setting may be included in the instruction provided by the user.

Therefore, the type of the input instruction and the way in which this input instruction is communicated between the portable electronic device 1000 and the entertainment system 10 is not particularly limited in accordance with embodiments of the disclosure.

Returning to the example of Figure 6, it will be appreciated that the provision of the instruction via the portable electronic device in order to update the value of the control setting enables the value of the control setting to be changed more easily and efficiently by the user.

Consider a situation where the user is playing a video game such as a racing game on the entertainment system 10. During the gameplay, the user may decide that the output of the display is too dark and therefore wish to change the value of the control setting related to the brightness of the content produced by the entertainment system 10. In this situation, the user may provide an input instruction via the portable electronic device 1000 to increase the value of this control setting. The user can perform this operation via the portable electronic device 1000 regardless of the current state of the video game. That is, the user can perform the operation via the portable electronic device 1000 at any stage during the execution of the video game (e.g. during gameplay). Accordingly, the user does not need to first pause the game and then navigate through a series of cumbersome menus in order to change the value of the control setting.

Moreover, as the value of the control setting is updated via the portable electronic device during execution of the video game, the impact of the change in the control setting can be immediately observed by the user. That is, in examples, the change to the control setting is made by the information processing system can be reflected in real time (or substantially real time) as the user makes these changes to the value of the control setting. Indeed, as the input instruction is provided via the portable electronic device, the user does not have to repeatedly pause and resume the video game in order to make the changes to the control setting and see how these changes are reflected in the execution of the video game. Therefore, it becomes easier for the user to more accurately change the value of the control setting to a desired level (e.g. in order to achieve a desired modification of the generated content), as adjustments to settings can be made through the portable electronic device and thus can be immediately perceived by the user, e.g. in the intended game environment.

In some examples, a user interface may be provided on the portable interface as part of the application running on the portable electronic device which enables the user to change the value of the control settings. For example, the user interface may include one or more interactive elements such as a button, slider, toggle, knob, bar, checkbox or other interactive element which can be used in order to change a value of the control setting. However, the present disclosure is not particularly limited in this regard. Any input mechanism can be used or implemented on the portable electronic device 1000 in order to enable the user to provide an input instruction which can be used, by the entertainment system 10, to update the value of the control setting.

In some examples, the portable electronic device may display a number of different profiles to the user. These profiles may include pre-configured arrangements of the values of the control settings. Accordingly, the user may select a certain profile on the portable electronic device in order to quickly and easily cause a change to a plurality of different control settings stored in the information processing system. For example, the profiles may include a configuration of a plurality of control settings for a certain type of video game, or a configuration of a plurality of control settings for use of the information processing system in a certain location or environment (e.g. indoor use vs outdoor use). Accordingly, in embodiments, the updating unit 5006 (or circuitry) may be configured to update, during execution of the first software, the value of a plurality of control settings in dependence upon a profile selected by the user.

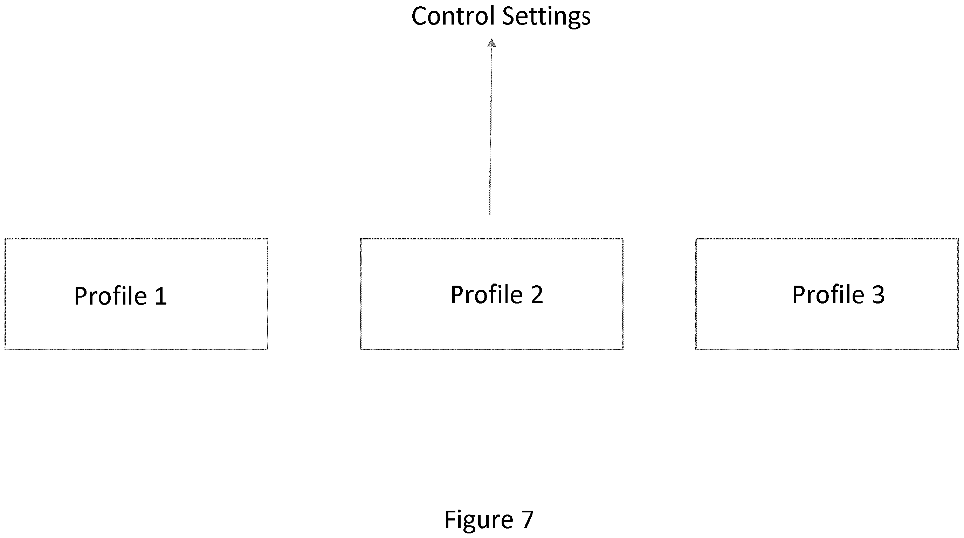

Consider, now, the example of Figure 7 of the present disclosure. Figure 7 illustrates an example of updating control settings in accordance with embodiments of the disclosure.

Figure 7 illustrates an example user interface as may be provided to a user on a display of the portable electronic device. In this example, a number of different options are provided to the user, each of these options corresponding to a different profile. In particular, three different profiles (Profile 1, Profile 2 and Profile 3) are displayed to the user. These options may be presented to the user on the user interface as different interactive elements. Here, in this example, the options are presented to the user as different buttons. The user may then provide an input (e.g. a touch operation) at the portable electronic device to provide an input instruction corresponding to one of these different options. In this example, the user selects Profile 2 as the desired profile for the information processing system 5000. Upon providing an input corresponding to this Profile, the API of the portable electronic device 1000 may generate a control signal in order to update the control settings stored in the storage unit 5002 of the information processing system 5000 on the basis of the Profile which has been selected. In this example, Profile 2 which has been selected by the user may correspond to a profile for an action game, and may define the value of certain (customizable) control settings related to the brightness of the display, the contrast of the display and the volume of special effects within the video game. Upon selecting the Profile, the corresponding control settings in the information processing system are updated accordingly. Thus, once a profile has been selected by the user, the corresponding changes in the control settings are taken into account by the information processing system 5000 from that point onwards. This means that the control settings can be quickly and easily be updated to a desired level.

While the example of Figure 7 has been described with reference to a specific layout of a user interface and a specific number of profiles, it will be appreciated that the present disclosure is not particularly limited in this regard. That is, Figure 7 merely provides one example concerning the way in which the control settings can be updated using the portable electronic device and is not limiting to embodiments of the disclosure.

Once the value of the control setting has been updated, the updated value of the control setting is stored in the storage unit. This value is then used by the information processing system 5000 during execution of the video game from that point forward. This enables the change in the value of the control setting to be reflected as it is changed by the user via the portable electronic device.

### <Generating Unit>

As explained, the information processing apparatus 5000 further comprises a generating unit 5008 (or circuitry) configured to generate content for provision to a user in dependence upon the execution of the first software and the value of the control setting.

The generating unit 5008 (or circuitry) of the information processing system 5000 may be implemented by processing circuitry such as a central processor 20 and or a graphical processing unit 30. This may be a single or multi core processor, for example comprising eight cores as in the PS5. The GPU can be physically separate to the CPU, or integrated with the CPU as a system on a chip (SoC), as in the PS5. However, the present disclosure is not particularly limited in this regard and any suitable processing circuitry can be used in accordance with embodiments of the disclosure as required.

In examples, the generating unit 5008 takes the output of the execution of the video game (e.g. the current state of the video game) and generates an output for provision to the user in dependence on the result of this execution of the video game (e.g. the current state of the game). For example, the generating unit generates the video output for display to the user based on the current state of the video game and the value of the one or more control settings stored in the storage unit. For example, if the value of the control setting is such to increase the brightness of the output, the generating unit 5008 will adapt the output from the execution of the video game and will increase the brightness of the video content in accordance with the current value of the control setting. Then, the generating unit 5008 generates the content for provision to the user on this basis.

Thus, while the execution unit 5004 of the information processing system 5000 is configured to execute the video game and thus update the state of the game (i.e. the current situation in the game) based, at least in part, on input as provided by the user, it is the generation unit 5008 which generates the content for provision to the user on the basis of the execution of the video game and the value of the one or more control settings.

As previously explained, the output can include audio content and/or visual content for provision to the user. Furthermore, the output (content generated by the generating unit 5008) can also include other content such as content detailing a haptic feedback which should be provided to the user.

In some examples, the information processing system may include a display device. Visual content generated by the generating unit 5008 may then be displayed on the display device in order that it can be viewed by the user. In other examples, the generating unit 5008 may generate content which is then passed to an external device (being a device external to the information processing system) in order that the content can be displayed to the user. The present disclosure is not particularly limited in this respect.

It will be appreciated that the generating unit 5008 generate may be configured to generate content for display throughout the execution of the video game. That is, the generating unit 5008 may generate content for provision to the user at period intervals - such as at the desired frame rate of the video game - and output this content for provision to the user in this manner. At every instant when the generating unit 5008 generates the content for provision to the user, the generating unit 5008 may therefore generate the content on the basis for the current value of the control setting as stored in the storage unit 5002.

Thus, as the user changes the value of the control setting (via the portable electronic device) the user can perceive the video game and understand the changes the update to the value of the control setting have had.

### <Method>

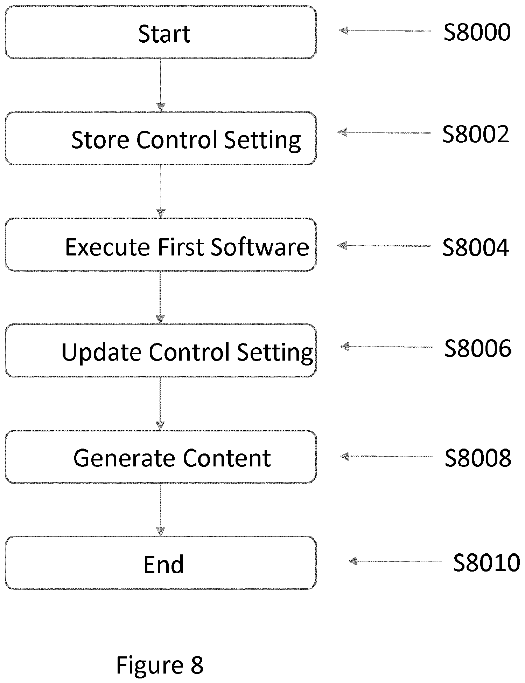

Hence, more generally, an information processing method is provided in accordance with embodiments of the disclosure. Figure 8 illustrates an example information processing method in accordance with embodiments of the disclosure. The method illustrated in Figure 8 may, in some examples, be performed by an information processing system such as the entertainment system 10 described with reference to Figure 2 of the present disclosure.

The method starts at step S8000 and proceeds to step S8002.

In step S8002, the method comprises storing a value of a control setting for an information processing system. The method then proceeds to step S8004.

In step S8004, the method comprises executing first software on the information processing system, wherein the first software is a video game. The method then proceeds to step S8006.

In step S8006, the method comprises updating, during execution of the first software, the value of the control setting in dependence upon an input instruction received via second software executed on a portable electronic device.

The method then proceeds to step S8008, which comprises generating content for provision to a user in dependence upon the execution of the first software and the value of the control setting.

The method then proceeds to, and ends with, step S8010.

Accordingly, it becomes easier and more efficient for a user to update settings of the video game during gameplay. Thus, more efficient control of the information processing system is provided.

The present disclosure is not particularly limited to the steps of the method as illustrated in Figure 8 of the present disclosure. Instead, Figure 8 provides an example of the information processing method of the present disclosure.

In some examples, a number of additional method steps may be performed. Alternatively, a number of the method steps illustrated in Figure 8 may be performed in a different order to that illustrated in the example of Figure 8.

As an example, Figure 8 shows that the method proceeds to step S8010 once the content has been generated. However, in other examples, the method may return from step S8008 to step S8004. That is, in embodiments of the disclosure, the method may comprise continually updating the control setting in accordance with instructions received via the second software executed on the portable electronic device during execution of the first software (the video game). Therefore, in some examples, the method may proceed to step S8010 only when the user issues a command to stop executing the first software (i.e. stops playing the video game).

### <Computer Program>

Furthermore, it will be appreciated that the above methods may be carried out on conventional hardware (such as that described previously herein) suitably adapted as applicable by software instruction or by the inclusion or substitution of dedicated hardware. Thus, the required adaptation to existing parts of a conventional equivalent device may be implemented in the form of a computer program product comprising processor implementable instructions stored on a non-transitory machine-readable medium such as a floppy disk, optical disk, hard disk, PROM, RAM, flash memory or any combination of these or other storage media, or realized in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

### <Clauses>

In addition, embodiments of the present disclosure may be arranged in accordance with the following numbered clauses:
1. An information processing method comprising:
   storing a value of a control setting for an information processing system;
   executing first software on the information processing system, wherein the first software is a video game;
   updating, during execution of the first software, the value of the control setting in dependence upon an input instruction received via second software executed on a portable electronic device; and
   generating content for provision to a user in dependence upon the execution of the first software and the value of the control setting.
2. The information processing method according to clause 1, wherein the second software includes an Application Programming Interface, API.
3. The information processing method according to clause 1 or 2, wherein the method comprises controlling one or more gameplay elements of the video game in dependence upon a second input instruction.
4. The information processing method according to clause 3, wherein the second input instruction is received via a controller, a camera, or a microphone communicatively coupled with the information processing system.
5. The information processing method according to any preceding clause, wherein the control setting is a control setting associated with the first software and used by the information processing system when executing the first software.
6. The information processing method according to any preceding clause, wherein the control setting is a control setting used by the information processing system when executing a plurality of types of first software.
7. The information processing method according to any preceding clause, wherein the control setting includes a setting to control an accessibility function of the content.
8. The information processing method according to any preceding clause, wherein the generated content includes video content and wherein the control setting includes a setting to control one of more of: a brightness of the video content, a colour of the video content, a contrast of the video content, and/or a resolution of the video content.
9. The information processing method according to any preceding clause, wherein the generated content includes audio content and wherein the control setting includes a setting to control one or more of: a volume of the audio content, a frequency of the audio content, a speed of the audio content, and/or a type of audio content.
10. The information processing method according to any preceding clause, wherein the control setting includes a video game setting.
11. The information processing method according to any preceding clause, wherein the second software includes a number of profiles and the method comprises updating, during execution of the first software, the value of a plurality of control settings in dependence upon a profile selected by the user.
12. The information processing method according to any preceding clause, wherein the input instruction defines a value to replace a current value of the control setting or wherein the input instruction defines a value to modify a current value of the control setting.
13. The information processing method according to any preceding clause, wherein the method comprises updating the value of the control setting when the input instruction is received independent of a current state of the video game.
14. The information processing method according to any preceding clause, wherein the method comprises updating the value of the control setting in real time.
15. A computer program comprising instructions which, when implemented by a computer, cause the computer to perform an information processing method according to any of clauses 1 to 14.
16. A non-transient computer readable medium storing the computer program according to clause 15.
17. An information processing system, the information processing system comprising circuitry configured to:
   store a value of a control setting for an information processing system;
   execute first software on the information processing system, wherein the first software is a video game;
   update, during execution of the first software, the value of the control setting in dependence upon an input instruction received via second software executed on a portable electronic device; and
   generate content for provision to a user in dependence upon the execution of the first software and the value of the control setting.

It will be appreciated that numerous modifications and variations of the present disclosure are possible in light of the above teachings. It is therefore to be understood that within the scope of the appended claims, the disclosure may be practiced otherwise than as specifically described herein.

In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present disclosure.

It will be appreciated that the above description for clarity has described embodiments with reference to different functional units, circuitry and/or processors. However, it will be apparent that any suitable distribution of functionality between different functional units, circuitry and/or processors may be used without detracting from the embodiments.

Described embodiments may be implemented in any suitable form including hardware, software, firmware or any combination of these. Described embodiments may optionally be implemented at least partly as computer software running on one or more data processors and/or digital signal processors. The elements and components of any embodiment may be physically, functionally and logically implemented in any suitable way. Indeed the functionality may be implemented in a single unit, in a plurality of units or as part of other functional units. As such, the disclosed embodiments may be implemented in a single unit or may be physically and functionally distributed between different units, circuitry and/or processors.

Although the present disclosure has been described in connection with some embodiments, it is not intended to be limited to the specific form set forth herein. Additionally, although a feature may appear to be described in connection with particular embodiments, one skilled in the art would recognize that various features of the described embodiments may be combined in any manner suitable to implement the technique.

## Claims

1. An information processing method comprising:
storing a value of a control setting for an information processing system;
executing first software on the information processing system, wherein the first software is a video game;
updating, during execution of the first software, the value of the control setting in dependence upon an input instruction received via second software executed on a portable electronic device, wherein the control setting is a control setting associated with the first software and used by the information processing system when executing the first software; and
generating content for provision to a user in dependence upon the execution of the first software and the value of the control setting.

2. The information processing method according to claim 1, wherein the second software includes an Application Programming Interface, API.

3. The information processing method according to claim 1 or 2, wherein the method comprises controlling one or more gameplay elements of the video game in dependence upon a second input instruction.

4. The information processing method according to claim 3, wherein the second input instruction is received via a controller, a camera, or a microphone communicatively coupled with the information processing system.

5. The information processing method according to any preceding claim, wherein the control setting is a control setting used by the information processing system when executing a plurality of types of first software.

6. The information processing method according to any preceding claim, wherein the control setting includes a setting to control an accessibility function of the content.

7. The information processing method according to any preceding claim, wherein the generated content includes video content and wherein the control setting includes a setting to control one of more of: a brightness of the video content, a colour of the video content, a contrast of the video content, and/or a resolution of the video content.

8. The information processing method according to any preceding claim, wherein the generated content includes audio content and wherein the control setting includes a setting to control one or more of: a volume of the audio content, a frequency of the audio content, a speed of the audio content, and/or a type of audio content.

9. The information processing method according to any preceding claim, wherein the control setting includes a video game setting.

10. The information processing method according to any preceding claim, wherein the second software includes a number of profiles and the method comprises updating, during execution of the first software, the value of a plurality of control settings in dependence upon a profile selected by the user.

11. The information processing method according to any preceding claim, wherein the input instruction defines a value to replace a current value of the control setting or wherein the input instruction defines a value to modify a current value of the control setting.

12. The information processing method according to any preceding claim, wherein the method comprises updating the value of the control setting when the input instruction is received independent of a current state of the video game.

13. A computer program comprising instructions which, when implemented by a computer, cause the computer to perform an information processing method according to any of claims 1 to 12.

14. A non-transient computer readable medium storing the computer program according to claim 13.

15. An information processing system, the information processing system comprising circuitry configured to:
store a value of a control setting for an information processing system;
execute first software on the information processing system, wherein the first software is a video game;
update, during execution of the first software, the value of the control setting in dependence upon an input instruction received via second software executed on a portable electronic device, wherein the control setting is a control setting associated with the first software and used by the information processing system when executing the first software; and
generate content for provision to a user in dependence upon the execution of the first software and the value of the control setting.
